# EUROPÄISCHE PATENTSCHRIFT

(11) **EP 2 300 782 B1**
(45) Veröffentlichungstag und Bekanntmachung des Hinweises auf die Patenterteilung: **25.07.2018**
(21) Anmeldenummer: 09757342.2
(22) Anmeldetag: 31.03.2009
(51) Int. Cl.: G01D 5/347

(54) **POSITIONSMESSSYSTEM**
POSITION MEASURING SYSTEM
DISPOSITIF DE MESURE DE POSITION

(30) Priorität: 06.06.2008 DE 102008027641
(43) Veröffentlichungstag der Anmeldung: 30.03.2011
(73) Patentinhaber: Dr. Johannes Heidenhain GmbH, 83301 Traunreut (DE)
(72) Erfinder: HERMANN, Michael, 83342 Tacherting (DE); SÄNDIG, Karsten, 83349 Palling (DE)
(86) Internationale Anmeldenummer: PCT/EP2009/053801
(87) Internationale Veröffentlichungsnummer: WO 2009/146959

(56) Entgegenhaltungen:
- WO-A-90/15302
- US-A1- 2005 246 916

## Beschreibung

Die Erfindung betrifft ein Positionsmesssystem nach dem Oberbegriff des Patentanspruchs 1.

Ein derartiges Positionsmesssystem umfasst einen Teilungsträger, der an einer ersten Oberfläche eine entlang einer Messrichtung erstreckte, elektromagnetische Strahlung reflektierende Messteilung aufweist, sowie einen dem Teilungsträger zugeordneten Abtastkopf zur Abtastung der Messteilung, der einen Sender zum Aussenden elektromagnetischer Strahlung in Richtung auf die Messteilung und einen Empfänger zum Empfangen der von der Messteilung reflektierten Strahlung aufweist.

Das entsprechende Positionsmesssystem kann hierbei sowohl als Längenmesssystem wie auch als Winkelmesssystem ausgebildet sein. Im Fall eines Längenmesssystems erstreckt sich die abzutastende Messteilung entlang einer linear ausgerichteten Messrichtung, entlang der der Teilungsträger in Form eines Maßstabes und der Abtastkopf relativ zueinander beweglich (verschiebbar) sind. Im Fall eines Winkelmesssystems erstreckt sich die Messteilung kreisringförmig bzw. rotationssymmetrisch um eine Rotationsachse entlang einer gekrümmten Messrichtung, wobei der Teilungsträger in Form einer (kreisrunden) Scheibe und der Abtastkopf um die Rotationsachse relativ zueinander beweglich (verdrehbar) sind.

Bei der abzutastenden Messteilung kann es sich wahlweise um eine Inkrementalteilung oder um eine absolute Messteilung handeln, wobei eine Inkrementalteilung beispielsweise aus einer oder mehreren Teilungsspuren besteht, die jeweils durch eine entlang der Messrichtung periodische Strichstruktur gebildet werden, durch deren Abtastung Positionsänderungen des Abtastkopfes bezüglich des Teilungsträgers entlang der Messrichtung ermittelbar sind, und wobei eine absolute Messteilung beispielsweise aus einer oder mehreren Code-Spuren besteht, die eine entlang der Messrichtung nicht-periodische Struktur aufweisen, durch deren Abtastung die aktuelle Position des Abtastkopfes bezüglich des Teilungsträgers entlang der Messrichtung ermittelbar ist. Insbesondere im Fall eines inkrementalen Messsystems kann zusätzlich zu der Inkrementalteilung eine (fotoelektrisch abtastbare) Referenzspur mit mindestens einer Referenzmarke vorgesehen sein, um die durch Abtastung der periodischen Strichstrukture(n) gewonnenen Informationen über Positionsänderungen des Abtastkopfes bezüglich des Teilungsträgers auf eine bestimmte Referenzlage beziehen zu können.

Für weitere Einzelheiten hinsichtlich der Ausgestaltung von Positionsmesssystemen, sowohl bei Verwendung inkrementaler als auch bei Verwendung absoluter Messverfahren, und insbesondere auch hinsichtlich des licht- bzw. fotoelektrischen Messprinzips zur Abtastung einer Messteilung mittels eines Abtastkopfes im Reflektionsverfahren sei auf das Fachbuch Digitale Längen- und Winkelmesstechnik: Positionsmesssysteme für den Maschinenbau und die Elektronikindustrie von Alfons Ernst (Landsberg / Lech; 1998) verwiesen.

Vorliegend bilden der Teilungsträger und der Abtastkopf als voneinander separate Baugruppen ein so genanntes offenes Positionsmesssystem. Das heißt, bei bestimmungsgemäßer Anordnung des Abtastkopfes bezüglich des Teilungsträgers, so dass durch (fotoelektrische) Abtastung des Teilungsträgers mittels des Abtastkopfes eine Positionsmessung durchgeführt werden kann, ist der Raum zwischen dem Teilungsträger und dem Abtastkopf nicht gegenüber der Umgebung abgeschlossen; und weiterhin lassen sich Abtastkopf und Teilungsträger entlang der Messrichtung in beliebige Relativpositionen zueinander bringen, also, insbesondere im Fall eines Längenmesssystems, auch in eine Relativposition, in der der Teilungsträger nicht mehr im Abtastbereich des Abtastkopfes angeordnet ist (sofern dies nicht durch äußere Einflüsse, z.B. nach Einbau des Positionsmesssystems in eine Werkzeugmaschine verhindert wird). Der Teilungsträger und der Abtastkopf bilden also insbesondere kein so genanntes gekapseltes System, bei dem der Raum, innerhalb dessen mittels des Abtastkopfes eine fotoelektrische Abtastung des Teilungsträgers erfolgt, gegenüber der Umgebung durch Kapselung abgeschlossen ist. Ferner ist bei derartigen offenen Positionsmesssystemen keine mechanische Verbindung zwischen Abtastkopf und Teilungsträger vorgesehen.

Bei einem derartigen Positionsmesssystem kann die Notwendigkeit bestehen, besondere Schutzmaßnahmen in der Umgebung des Messsystems zu treffen, wenn zur fotoelektrischen Abtastung des Teilungsträgers elektromagnetische Strahlung, insbesondere Laserstrahlung, verwendet wird, die für Menschen potentiell gesundheitsgefährdende Wirkungen haben kann. Die Verwendung elektromagnetischer Strahlung, insbesondere von Laserstrahlung, mit hoher Leistung, welche Schutzmaßnahmen erforderlich macht, kann beispielsweise deswegen angezeigt sein, um bei der fotoelektrischen Abtastung des Teilungsträgers ein geringes Rauschen und eine hinreichende Störfestigkeit zu erreichen.

Ein Risiko, dass von dem Sender des Abtastkopfes ausgesandte elektromagnetische Strahlung in die Umgebung austritt, besteht bei einem offenen, nicht gekapselten Positionsmesssystem insbesondere dann, wenn der Abtastkopf und der Teilungsträger, z.B. aufgrund von Montagearbeiten, nicht bestimmungsgemäß für eine Positionsmessung zueinander positioniert sind und die vom Abtastkopf ausgesandte elektromagnetische Strahlung nicht auf die mit der Messteilung versehene Oberfläche des Teilungsträgers auftrifft.

Aus der JP-A 22 54 317 ist es bekannt, zusätzliche Detektionsmittel zu verwenden, um die Anwesenheit eines einem Abtastkopf zugeordneten, abzutastenden Objektes zu ermitteln und die Aussendung elektromagnetischer Strahlung durch den Abtastkopf zu sperren, wenn sich das abzutastende Objekt nicht im Strahlengang der vom Abtastkopf auszusendenden elektromagnetischen Strahlung befindet. Ein solches Vorgehen ist jedoch vergleichsweise aufwändig, wenn hierdurch mit hinreichender Zuverlässigkeit die (risikobehaftete) Abwesenheit eines abzutastenden Objektes im Strahlengang des Abtastkopfes erfasst werden soll.

Die US 2005/0246916 A1 offenbart ein optisches Längenmesssystem mit einem Abtastkopf und einem demgegenüber beweglichen Maßband. Das Maßband kann hierbei sowohl im Auflicht als auch im Durchlicht abgetastet werden, wobei im Bereich des Abtastkopfes eine Auflage für das Maßband vorgesehen ist, die zur lokalen Dämpfung eventueller Maßband-Vibrationen dient.

Aus der WO 90/15302 ist ein weiteres optisches Längenmesssystem bekannt, in dem aus der Abtastung eines aufrollbaren Maßbandes inkrementale und absolute Positionsdaten erzeugt werden, um darüber zu bestimmen, wie weit das Maßband aus einem Gehäuse herausgzogen wurde.

Der Erfindung liegt das Problem zugrunde, ein Positionsmesssystem der eingangs genannten Art zu schaffen, bei dem ein unkontrollierter Austritt zur Abtastung eines Teilungsträgers ausgesandter elektromagnetischer Strahlung mit möglichst einfachen Mitteln verhindert wird.

Dieses Problem wird erfindungsgemäß durch die Schaffung eines Positionsmesssystems mit den Merkmalen des Anspruchs 1 gelöst.

Danach steht von dem Abtastkopf des Positionsmesssystems ein gemeinsam mit dem Abtastkopf relativ zu dem Messsystem bewegbarer Umgriff ab, der bei bestimmungsgemäßer Anordnung des Abtastkopfes bezüglich des Teilungsträgers für eine Positionsmessung den Teilungsträger derart umgreift, dass sich ein als Schutzabschnitt dienender Abschnitt des Umgriffes vor der zweiten Oberfläche des Teilungsträgers erstreckt, die der mit der Messteilung versehenen ersten Oberfläche abgewandt ist. Der Umgriff steht also derart vom Abtastkopf des Positionsmesssystems ab, dass bei bestimmungsgemäßer Positionierung des Abtastkopfes bezüglich des Teilungsträgers (für die Durchführung einer Positionsmessung) der Teilungsträger zwischen dem Abtastkopf und dem Schutzabschnitt des Umgriffes verläuft.

Hierdurch lässt sich das Risiko eines unkontrollierten Austrittes vom Sender des Abtastkopfes ausgesandter Strahlung in die Umgebung auch dann vermeiden oder zumindest erheblich reduzieren, wenn Teilungsträger und Abtastkopf nicht bestimmungsgemäß zueinander angeordnet sind.

Der Schutzabschnitt des Umgriffes weist dabei eine solche Ausdehnung auf, dass von dem Sender des Abtastkopfes ausgesandte elektromagnetische Strahlung bei Abwesenheit des Teilungsträgers auf jenen Schutzabschnitt trifft und somit nicht unkontrolliert in die Umgebung des Positionsmesssystems austreten kann.

Hierbei kann weiter vorgesehen sein, dass der Schutzabschnitt des Umgriffes derart bezüglich des Abtastkopfes angeordnet ist, dass ein möglichst großer Anteil von dem Sender des Abtastkopfes ausgesandter und auf den Schutzabschnitt auftreffender elektromagnetischer Strahlung, in Form von Laserstrahlung, auf den Abtastkopf zurückgeworfen wird.

Alternativ oder ergänzend ist der Schutzabschnitt des Umgriffes vorteilhaft so ausgestaltet, dass er auftreffende elektromagnetische Strahlung möglichst weitgehend absorbiert und/oder streut, so dass die nach dem Auftreffen der elektromagnetischen Strahlung auf den Schutzabschnitt möglicherweise in die Umgebung austretenden Strahlungsreste nur noch eine geringe, für Personen ungefährliche Intensität pro Raumwinkel aufweisen. Konkret kann vorgesehen sein, dass der Schutzabschnitt zumindest auf einer dem Sender des Abtastkopfes zugewandten Seite eine raue, schwarze Oberfläche aufweist.

Gemäß der Erfindung weist der Schutzabschnitt des Umgriffes einen solchen (geringen) Abstand von dem Abtastkopf auf, dass hierdurch ein Verkippen des Teilungsträgers aus seiner bestimmungsgemäßen Position bezüglich des Abtastkopfes begrenzt wird, und zwar vorteilhaft auf solche (kleinen) Kippwinkel, dass auch im verkippten Zustand des Teilungsträgers hieran reflektierte, vom Abtastkopf ausgesandte elektromagnetische Strahlung möglichst weitgehend auf den Abtastkopf zurückgeworfen wird und möglichst nicht, jedenfalls nicht mit gesundheitsgefährdender Intensität, in die Umgebung austritt. Es soll also verhindert werden, dass vom (verkippten) Teilungsträger reflektiertes Licht frei propagieren kann.

Hierbei kann insbesondere vorgesehen sein, dass der Umgriff ein mögliches Verkippen des Teilungsträgers aus seiner bestimmungsgemäßen Position bezüglich des Abtastkopfes um beliebige (Kipp-)Achsen begrenzt.

Ein Verkippen des Teilungsträgers bezüglich des Abtastkopfes bedeutet dabei nicht zwingend, dass der Teilungsträger selbst aktiv aus seiner bestimmungsgemäßen Position heraus verkippt sein muss; vielmehr kann es sich bei dem tatsächlich verkippten Bauteil auch um den Abtastkopf handeln. Von Bedeutung ist allein, dass der Teilungsträger bezogen auf den Abtastkopf gegenüber seiner bestimmungsgemäßen Position verkippt ist. Ob dies auf eine Abweichung der Lage des Teilungsträgers oder des Abtastkopfes gegenüber der Solllage zurückzuführen ist, ist nicht von Bedeutung.

Der Umgriff ist derart mit dem Abtastkopf verbunden, dass der Umgriff bei einer Bewegung des Abtastkopfes (relativ zu dem Teilungsträger) stets mitgenommen wird. Hierzu kann der Umgriff mit dem Abtastkopf bzw. dessen Gehäuse eine einstückige, insbesondere einstückig geformte, Baueinheit bilden. Andererseits kann aber auch vorgesehen sein, dass der Umgriff als ein separates Bauteil unter Verwendung geeigneter Befestigungsmittel am Abtastkopf befestigt ist.

Der Schutzabschnitt des Umgriffes dient erfindungsgemäß zur Verhinderung eines unkontrollierten Austritts vom Abtastkopf ausgesandter elektromagnetischer Strahlung in die Umgebung, insbesondere bei Abwesenheit des Teilungsträgers. Der Schutzabschnitt bzw. der Umgriff insgesamt ist daher vorteilhaft frei von jedweden optischen Elementen, die zur Erzeugung, zur Führung oder zum Empfang der vom Sender des Abtastkopfes ausgesandten elektromagnetischen Strahlung - zum Zwecke der Abtastung der Messteilung des Teilungsträgers - dienen können. Weiterhin weist der Umgriff vorteilhaft auch keine sonstigen optischen, elektrischen oder elektronischen Bauelemente auf, welche zur Umwandlung, Auswertung oder Weiterleitung von Signalen dienen, die bei Abtastung des Teilungsträgers mittels des Abtastkopfes erzeugt werden.

Der Umgriff bildet also bevorzugt eine rein passive Baugruppe, die (nur) dazu dient, den unkontrollierten Austritt vom Sender des Abtastkopfes ausgesandter elektromagnetischer Strahlung in die Umgebung zu verhindern.

Weitere Einzelheiten und Vorteile der Erfindung werden bei der nachfolgenden Beschreibung von Ausführungsbeispielen anhand der Figuren deutlich werden.

Es zeigen:
- Fig. 1a: einen schematischen Querschnitt durch ein als Längenmesssystem ausgebildetes Positionsmesssystem mit einem mit einer Messteilung versehenen Teilungsträger und einem Abtastkopf zum Abtasten der Messteilung des Teilungsträgers;
- Fig. 1b: den Abtastkopf aus Fig. 1a ohne Teilungsträger;
- Fig. 2: eine erste Abwandlung der Anordnung aus Figur 1a;
- Fig. 3: eine zweite Abwandlung der Anordnung aus Figur 1a;
- Fig. 4: die Anordnung aus Figur 1a mit einem aus seiner bestimmungsgemäßen Lage heraus verkippten Teilungsträger;
- Fig. 5: eine schematisch-perspektivische Darstellung eines Teilungsträgers für ein als Längenmesssystem ausgebildetes Positionsmesssystem;
- Figur 6: einen schematischen Querschnitt durch ein als Winkelmesssystem ausgebildetes Positionsmesssystem mit einem mit einer Messteilung versehenen Teilungsträger und einem Abtastkopf zum Abtasten der Messteilung des Teilungsträgers.

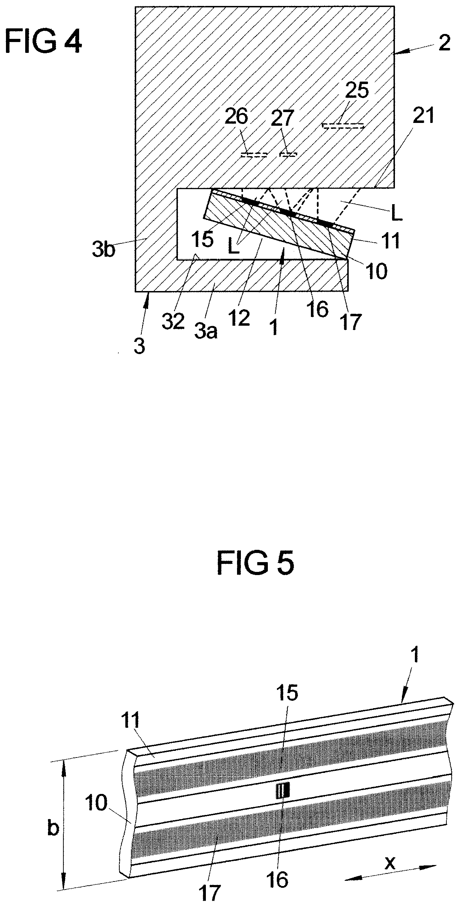

In Figur 5 ist schematisch ein Abschnitt eines als längserstreckter Maßstab ausgebildeten Teilungsträgers 1 für ein Positionsmesssystems in Form eines Längenmesssystems dargestellt, der auf einer ersten Oberfläche 11 seines Trägerkörpers 10 mit einer entlang einer Messrichtung x erstreckten Messteilung 15, 16, 17 versehen ist. Die Messteilung 15, 16, 17 besteht hier aus zwei, entlang der Messrichtung x erstreckten Teilungsspuren 15, 17 in Form zweier Inkrementalspuren, jeweils gebildet durch eine Vielzahl entlang der Messrichtung x periodisch hintereinander angeordneter Teilungsstriche zur Erzeugung eines periodischen Ausgangssignales bei Abtastung durch einen Abtastkopf, sowie aus einer dazwischen angeordneten Referenzspur mit mindestens einer Referenzmarke 16 zur Erzeugung eines Referenzsignals.

Der Teilungsträger 1 mit seiner auf einer ersten Oberfläche 11 ausgebildeten Messteilung 15, 16, 17 ist dabei vorliegend ausgelegt für eine Abtastung durch elektromagnetische Strahlung nach dem so genannten fotoelektrischen Messprinzip, und zwar im so genannten Reflektions- bzw. Auflichtverfahren. Das heißt, die zur Abtastung des Teilungsträgers 1, und insbesondere der Messteilung 15, 16, 17 verwendete elektromagnetische Strahlung wird nach dem Auftreffen auf die Messteilung 15, 16, 17 hiervon reflektiert und die reflektierte Strahlung wird mittels eines Abtastkopfes erfasst und zur Positionsmessung ausgewertet.

Einzelheiten zur Ausbildung eines solchen Teilungsträgers sowie zu dessen Abtastung nach dem fotoelektrischen Messprinzip im so genannten Reflektions- bzw. Auflichtverfahren können der US 2008/0067333 A1 entnommen werden.

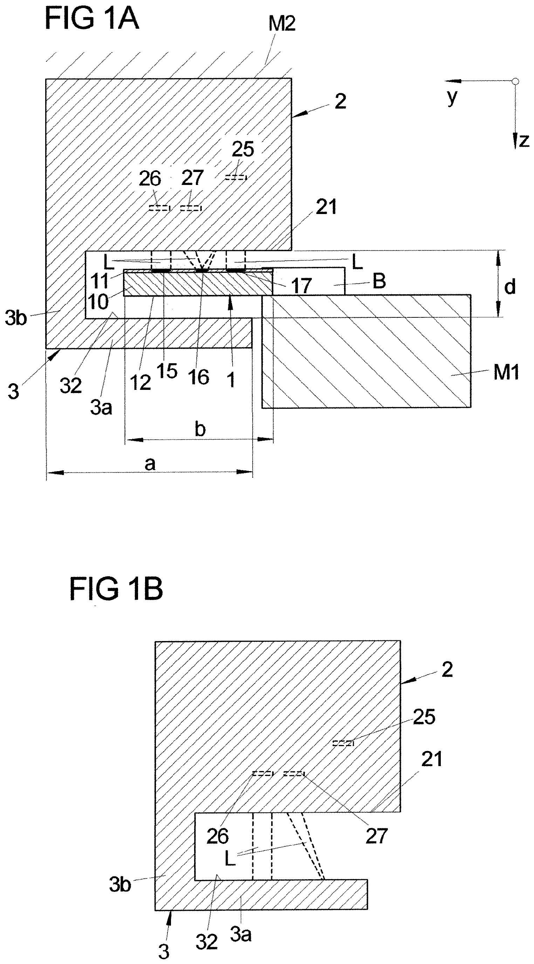

Dabei ist die Ausgestaltung der Messteilung in Figur 1 als Inkrementalteilung in Form einer periodischen Strichteilung und mit einer zusätzlichen Referenzmarkenspur als rein beispielhaft anzusehen. Die konkrete Ausgestaltung der Messteilung ist vorliegend nicht von Bedeutung, sofern es sich um eine im Reflektionsverfahren unter Verwendung elektromagnetischer Strahlung, insbesondere Laserstrahlung, abtastbare Messteilung handelt. Diese kann z.B. auch als eine absolut kodierte Messteilung, bestehend aus einer oder mehrerer Codespuren, ausgebildet sein.

Figur 1a zeigt einen durch einen Maßstab gebildeten Teilungsträger 1 eines Positionsmesssystems (Längenmesssystem) der anhand Figur 5 erläuterten Art zusammen mit einem zugeordneten Abtastkopf 2, der zum Abtasten der Messteilung 15, 16, 17 des Teilungsträgers 1 im Reflektionsverfahren mittels Laserlicht ausgebildet und vorgesehen ist, und zwar in einem Querschnitt. Die Messrichtung x, entlang der sich der Teilungsträger 1 mit seiner Messteilung 15, 16, 17 erstreckt, verläuft dementsprechend in Figur 1a senkrecht zur Blattebene, in welcher die yz-Ebene des Messsystems liegt.

Gemäß Figur 1a ist der Teilungsträger 1 über Befestigungsmittel B, zum Beispiel in Form einer so genannten Pratze, an einem ersten Bauteil M1 (z.B. einem Maschinenteil) von zwei relativ zueinander bewegbaren Baueilen M1, M2 (z.B. zwei Maschinenteilen) befestigt, deren Lage zueinander mittels des Positionsmesssystems 1, 2 ermittelt werden soll.

Der Teilungsträger 1 weist, wie bereits anhand Figur 5 erläutert, einen Trägerkörper 10 auf, welcher eine erste, mit der längserstreckten Messteilung 15, 16, 17 versehene Oberfläche 11 sowie eine dieser gegenüberliegende und hiervon abgewandte Oberfläche 12 definiert. Die beiden Oberflächen 11, 12 des Teilungsträgers 1 sind entlang einer vertikalen Achse (z-Achse) des Messsystems voneinander beabstandet, und zwar in einem Abstand, der durch die Dicke des Teilungsträgers 1 bzw. des Trägerkörpers 10 des Teilungsträgers 1 bestimmt ist.

Mit einem Teilbereich seiner der Messteilung 15, 16, 17 abgewandten zweiten Oberfläche 12 liegt der Teilungsträger 1 im Ausführungsbeispiel der Figur 1a auf einer Oberfläche desjenigen Bauteiles M1 an, an dem der Teilungsträger 1 über die Befestigungsmittel B, zum Beispiel einer Pratze, festgelegt ist.

Der zur Abtastung des Teilungsträgers 1, insbesondere von dessen Messteilung 15, 16, 17 vorgesehene Abtastkopf 2 ist in üblicher Weise an einem weiteren Bauteil M2 (zum Beispiel einem zweiten Maschinenteil) festzulegen, welches relativ zu dem ersten Bauteil M1 entlang der Messrichtung x (Erstreckungsrichtung des Teilungsträgers 1 und der hierauf vorgesehenen Messteilung 15, 16, 17) bewegbar ist, so dass mittels des Positionsmesssystems 1, 2 in Form eines Positionsmesssystems die Lage der beiden Bauteile M1, M2 zueinander entlang der Messrichtung x zu erfassen ist.

Der Abtastkopf 2 weist in bekannter Weise an einer aktiven Seite 21, die - bei bestimmungsgemäßer Anordnung des Abtastkopfes 2 bezüglich des Teilungsträgers 1 für eine Positionsmessung - der mit der Messteilung 15, 16, 17 versehenen ersten Oberfläche 11 des Teilungsträgers 1 zugewandt ist, mindestens einen Sender 25 zum Aussenden elektromagnetischer Strahlung L, hier in Form von Laserstrahlung, auf, mittels derer die Messteilung 15, 16, 17 abgetastet wird. Weiterhin ist auf der der ersten Oberfläche 11 des Teilungsträgers 1 zugewandten aktiven Seite 21 des Abtastkopfes 2 mindestens ein Empfänger 26, 27 vorgesehen, mit dem das mindestens eine Strahlenbündel erfasst wird, welches durch die an der Messteilung 15, 16, 17 reflektierte, zuvor vom Sender 25 ausgesandte Laserstrahlung gebildet wird.

Die Anordnung der Sender und Empfänger sowie die Darstellung der Abtaststrahlengänge ist dabei in Figur 1A stark schematisiert wiedergegeben; für konkrete Einzelheiten wird diesbezüglich auf die US 2008/0067333 A1 verwiesen. Dies betrifft beispielsweise eine Aufspaltung der von dem Sender 25 ausgesandten Strahlung L, um hiermit gezielt die (beiden) Teilungsspuren 15, 17 und die Referenzmarken 16 abtasten zu können, sowie die Rückführung der reflektierten Strahlung zu den Empfängern 26, 27; hierfür sind geeignete optische Elemente vorzusehen, wie z.B. in der US 2008/0067333 A1 beschrieben.

Anordnungen zum Abtasten eines Teilungsträgers 1 eines Positionsmesssystems mit einem zugeordneten Abtastkopf 2 im Reflektionsverfahren unter Verwendung elektromagnetischer Strahlung, insbesondere von Laserstrahlung L, sind auch mit einer Vielzahl anderer Konfigurationen als in der US 2008/0067333 A1 beschrieben bekannt. Für die konkrete Ausgestaltung einer derartigen Anordnung, insbesondere hinsichtlich der Abtastung eines Teilungsträgers 1 mittels eines zugeordneten Abtastkopfes 2 unter Verwendung spezifischer Strahlengänge für die ausgesandte Strahlung und die reflektierte Strahlung wird daher nur beispielhaft auf die US 2008/0067333 A1 verwiesen. Von Bedeutung ist vorliegend vor allem, dass zum Abtasten des Teilungsträgers 1 mittels des zugeordneten Abtastkopfes 2 elektromagnetische Strahlung, insbesondere in Form von Laserstrahlung, verwendet wird und dass die Abtastung nach dem so genannten Reflektionsprinzip erfolgt.

Ferner handelt es sich bei dem in Figur 1a dargestellten Positionsmesssystem in Form eines Positionsmesssystem um ein so genanntes offenes System, d. h. der Raum, in dem der Teilungsträger 1 bzw. dessen Messteilung 15, 16, 17 von dem Abtastkopf 2 durch elektromagnetische Strahlung L, R in Form von Laserstrahlung abgetastet wird, ist gegenüber der Umgebung nicht abgeschlossen bzw. verkapselt, so dass grundsätzlich Laserstrahlung aus jenem Raum austreten könnte, wenn der Teilungsträger 1 und der Abtastkopf 2 nicht bestimmungsgemäß zueinander angeordnet sind. Eine solche Situation kann bei einem offenen System z. B. deshalb auftreten, weil der Abtastkopf 2 und der Teilungsträger 1 entlang der Messrichtung x in beliebige Relativpositionen zueinander bringbar sind, somit insbesondere auch in eine Position, in der der Teilungsträger 1 mit seiner ersten Oberfläche 11 nicht mehr bestimmungsgemäß der mit Sender 25 und Empfänger 26, 27 versehenen aktiven Seite 21 des Abtastkopfes 2 gegenüberliegt, wie in Figur 1b dargestellt. In diesem Fall würde die von dem Sender 25 ausgesandte elektromagnetische Strahlung L nicht am Teilungsträger 1 reflektiert und könnte dementsprechend in die Umgebung des Positionsmesssystems entweichen. Sofern es sich hierbei um Laserstrahlung handelt, die zur Gewährleistung einer möglichst großen Störfestigkeit des Positionsmesssystems sowie zur Minimierung des Rauschens eine entsprechend hohe Intensität aufweist, kann dies dazu führen, dass in der Umgebung des Positionsmesssystems zusätzliche Schutzmaßnahmen zu treffen sind, um Bedienpersonal vor der Laserstrahlung zu schützen.

Insbesondere bilden der Teilungsträger 1 und der Abtastkopf 2 vorliegend zwei voneinander separate Baugruppen, die getrennt voneinander am jeweils zugeordneten Bauteil M1 bzw. M2 festzulegen sind. Dementsprechend lassen sich der Abtastkopf 2 und der Teilungsträger 1 entlang der Messrichtung x in beliebige Relativpositionen bringen, wobei die im Prinzip schrankenlose Relativbeweglichkeit jedoch nach Befestigung an den beiden Bauteilen M1, M2 eingeschränkt sein kann; etwa dann, wenn es sich bei den beiden Bauteilen M1, M2 um Maschinenteile, z. B. einer Werkzeugmaschine, handelt, die konstruktionsbedingt im Betrieb der Maschine nur begrenzt zueinander verfahrbar sind. Auch in solchen Fällen kann aber nicht vollkommen ausgeschlossen werden, dass etwa bei Montagearbeiten oder sonstigen vorbereitenden Arbeiten an der Maschine die beiden Maschinenteile M1, M2 in Relativpositionen bringbar sind, die von den im Normalbetrieb der Maschine anfahrbaren Relativpositionen abweichen und dazu führen, dass der Teilungsträger 1 nicht mehr im Abtastbereich des Abtastkopfes 2 angeordnet ist.

Nach der Klassifikation von Laserstrahlung in so genannte Laserschutzklassen, wie sie z.B. in der IEC 60825-01 definiert sind, ist bei Laserstrahlung, welche der Laserschutzklasse 1 zugeordnet wird, kein besonderer Schutz in der Umgebung der Strahlungsquelle befindlicher Personen erforderlich, weil von solcher Laserstrahlung keine gesundheitsgefährdende Wirkung ausgeht. Bei Laserstrahlung, die - z. B. aufgrund ihrer Intensität - einer höheren Laserschutzklasse zuzuordnen ist, müssen demgegenüber zusätzliche Schutzmaßnahmen getroffen werden, wenn das Risiko besteht, dass derartige Laserstrahlung in die Umgebung eines Positionsmessgerätes austreten kann.

Um den mit solchen Schutzmaßnahmen verbundenen Aufwand zu vermeiden, ist an dem Abtastkopf 2 vorliegend ein zusätzlicher Umgriff 3 vorgesehen, der mit einem Verbindungsabschnitt 3b von dem Abtastkopf 2 absteht und der sich mit einem Schutzabschnitt 3a vor der dem Abtastkopf 2 abgewandten zweiten Oberfläche 12 des Teilungsträgers 1 erstreckt, so dass der Umgriff 3 zusammen mit der dem Teilungsträger 1 zugewandten aktiven Seite 21 des Abtastkopfes 2 den Teilungsträger 1 - bei bestimmungsgemäßer Anordnung des Abtastkopfes 2 bezüglich des Teilungsträgers 1 - im Wesentlichen U-förmig umgibt.

Konkret verläuft bei bestimmungsgemäßer Anordnung des Abtastkopfes 2 bezüglich des Teilungsträgers 1 der Verbindungsabschnitt 3b des Umgriffes 3 neben dem Trägerkörper 10 des Teilungsträgers 1 und der Schutzabschnitt 3a liegt mit einer Oberfläche 32 der zweiten Oberfläche 12 des Teilungsträgers 1 gegenüber, vergleiche Figur 1a.

Bei Abwesenheit des Teilungsträgers 1 - z. B. weil die relativ zueinander bewegbaren Bauteile M1, M2, an denen der Teilungsträger 1 einerseits und der Abtastkopf 2 andererseits festgelegt sind, in eine (außerplanmäßige) Relativposition verfahren worden sind, in der der Teilungsträger 1 mit seiner ersten Oberfläche 11 Sender 25 und Empfänger 26, 27 des Abtastkopfes 2 nicht mehr gegenüberliegt, wie in Figur 1b dargestellt - verhindert der Schutzabschnitt 3a des Umgriffs 3 das unkontrollierte Austreten von dem Sender 25 ausgesandter Strahlung in die Umgebung. Der Schutzabschnitt 3a des Umgriffs 3 ist hierzu derart bezüglich des Abtastkopfes 2 angeordnet und weist eine solche Ausdehnung a auf, dass von dem Sender 25 ausgesandte elektromagnetische Strahlung L auf die innere Oberfläche 32 des Schutzabschnittes 3a auftrifft, wenn der Teilungsträger 1 nicht bestimmungsgemäß gegenüber jenem Sender 25 angeordnet ist, vergl. Figur 1b.

Der Schutzabschnitt ist auf seiner inneren Oberfläche 32 strahlungsabsorbierend und/oder streuend ausgestaltet, z. B. indem die innere Oberfläche 32 als eine schwarzfarbene, raue Oberfläche ausgebildet ist. Hierdurch wird die von dem Sender 25 ausgesandte Strahlung L bei Abwesenheit des Teilungsträgers 1, wie in Figur 1b dargestellt, zu einem erheblichen Teil an der inneren Oberfläche 32 des Schutzabschnittes 3a absorbiert und/oder gestreut, so dass keine (Laser-)Strahlung erheblicher Intensität in die Umgebung austreten kann, welche zusätzliche Schutzmaßnahmen erforderte.

Allgemein sind der Umgriff 3 und insbesondere dessen Schutzabschnitt 3a mit der inneren Oberfläche 32 vorliegend so auszulegen, dass selbst bei Abwesenheit des Teilungsträgers 1 während Sender 25 des Abtastkopfes 2 elektromagnetische Strahlung L (Laserstrahlung) aussenden, keine solche Strahlung aus dem Raum zwischen der aktiven Seite 21 des Abtastkopfes 2 und dem Schutzabschnitt 3a des Umgriffs 3 austreten kann, die zusätzliche Schutzmaßnahmen in der Umgebung des Positionsmesssystems 1, 2 erforderlich machte, also insbesondere keine Laserstrahlung einer höheren Laserklasse als der Laserklasse 1.

Neben der bereits erwähnten absorbierenden und/oder lichtstreuenden Ausgestaltung der inneren Oberfläche 32 des Schutzabschnittes 2 kann hierzu weiterhin vorgesehen sein, dass aufgrund der geometrischen Anordnung des Schutzabschnittes 3a bezüglich der aktiven Seite 21 des Abtastkopfes 2 von dem mindestens einen Sender 25 ausgestrahlte und auf den Schutzabschnitt 3a auftreffende elektromagnetische Strahlung L, sofern sie nicht von der inneren Oberfläche 32 des Schutzabschnittes 3a absorbiert wird, zu einem möglichst großen Teil auf die aktive Seite 21 des Abtastkopfes 2 zurückgeworfen wird.

Der Umgriff 3a kann dabei einerseits unlösbar mit dem Abtastkopf 2 verbunden sein, z. B. indem der Umgriff 3 einstückig am Gehäuse des Abtastkopfes 2 angeformt oder stoffschlüssig, z. B. durch Schweißen, mit diesem verbunden ist; oder der Umgriff 3 kann als ein separates Bauteil über lösbare Befestigungselemente an dem Abtastkopf 2 fixiert sein. Im letztgenannten Fall sollten die verwendeten Befestigungselemente vorteilhaft so ausgestaltet sein, dass sie sich nur mit einem speziellen, auf jene Befestigungselemente abgestimmten Werkzeug betätigen (lösen) lassen. D.h., dass eine lösbare Verbindung zwischen Umgriff und Abtastkopf nur mit einem speziellen, für diese konkrete Verbindung ausgelegten Werkzeug lösbar sein sollte.

Weiterhin ist der Umgriff 3 und insbesondere dessen Schutzabschnitt 3a vorteilhaft so ausgestaltet und angeordnet, dass hiermit ein mögliches Verkippen des Teilungsträgers 1 bezüglich des Abtastkopfes 2, wie in Figur 4 dargestellt, auf möglichst kleine Kippwinkel begrenzt wird. Hierzu ist insbesondere der Abstand d zwischen der aktiven Seite 21 des Abtastkopfes 2 und der inneren Oberfläche 32 des Schutzabschnittes 3a möglichst klein zu wählen, soweit dies unter der Randbedingung des für eine ordnungsgemäße Abtastung vorgesehenen Mindestabstandes zwischen der aktiven Seite 21 des Abtastkopfes 2 und der ersten Oberfläche 11 des Teilungsträgers 1 möglich ist. Hiermit soll verhindert werden, dass bei einem Verkippen des Teilungsträgers 1 bezüglich des Abtastkopfes 2, z. B. durch Montagefehler beim Anbau des Teilungsträgers 1 und/oder des Abtastkopfes 2 an zugeordnete Bauteilen M1, M2, von dem Sender 25 ausgesandte und am Teilungsträger 1 reflektierte Strahlung L unkontrolliert aus dem Raum zwischen Teilungsträger 1 und innerer Seite 21 des Abtastkopfes 2 austreten kann. Bevorzugt sind die möglichen Kippwinkel des Teilungsträgers 1 bezüglich des Abtastkopfes 2 - sofern der Teilungsträger 1 zwischen der aktiven Seite 21 des Abtastkopfes 2 und dem Schutzabschnitt 3a des Umgriffs 3 liegt - auf solche Werte zu begrenzen, dass von dem Sender 25 ausgesandte und am Teilungsträger 1, genauer an der ersten Oberfläche 11 des Teilungsträgers 1, reflektierte Strahlung wieder auf den Abtastkopf 2, insbesondere dessen aktive Seite 21, zurückgeworfen wird, wie in Figur 4 dargestellt.

Ein Verkippen des Teilungsträgers 2 bezüglich des Abtastkopfes 1 bedeutet dabei nicht zwingend, dass der Teilungsträger 2 selbst aktiv aus seiner bestimmungsgemäßen Position heraus verkippt sein muss; vielmehr kann es sich bei dem tatsächlich verkippten Bauteil auch um den Abtastkopf 2 handeln. Von Bedeutung ist allein, dass der Teilungsträger 1 bezogen auf den Abtastkopf 2 gegenüber seiner bestimmungsgemäßen Position verkippt ist. Ob dies auf eine Abweichung der Lage des Teilungsträgers 1 oder des Abtastkopfes 2 gegenüber der Solllage zurückzuführen ist, ist nicht von Bedeutung.

Der Umgriff 3, insbesondere dessen Schutzabschnitt 3a, ist dabei vorliegend als eine reine Schutzeinrichtung ausgestaltet, die dem Zweck dient, das unkontrollierte Auskoppeln elektromagnetischer Strahlung hoher Intensität aus dem Raum zwischen der aktiven Seite 21 des Abtastkopfes 2 und der inneren Oberfläche 32 des Umgriffs 3 zu verhindern. Es handelt sich hierbei um eine passive Baugruppe, die (mit ihrer inneren Oberfläche 32) der Absorption, Streuung und/oder Rückreflektion elektromagnetischer Strahlung (Laserstrahlung) dient, welche, bei Abwesenheit des Teilungsträgers 1, vom Sender 25 des Abtastkopfes 2 ausgesandt wird. Der Umgriff 3 und insbesondere der Schutzabschnitt 3a weisen keine optischen Bauelemente auf, die der Erzeugung elektromagnetischer Strahlung, deren Übertragung zwischen Sender 25 und Empfänger 26, 27 oder dem Empfang solcher Strahlung für eine Positionsmessung dienten. Ferner sind im Ausführungsbeispiel am Umgriff 3 auch keinerlei (elektrische, elektronische oder optische) Bauelemente vorgesehen, die der Weiterleitung, Verarbeitung oder Auswertung von Signalen dienten, welche bei Abtastung des Teilungsträgers 1 durch den Abtastkopf 2 erzeugt werden.

Dies steht im Gegensatz zu der Funktion bekannter Umgriffe bei so genannten Durchlichtsystemen, bei denen ein Teilungsträger eines Positionsmesssystems in Durchlicht abgetastet wird und dementsprechend der Sender des Abtastkopfes einerseits und dessen Empfänger andererseits auf einander gegenüberliegenden, voneinander beabstandeten Seiten des Abtastkopfes angeordnet sind, also vor einander abgewandten Oberflächen des Teilungsträgers liegen. In diesem Fall trägt der Umgriff des Abtastkopfes z.B. dessen Empfänger, Sender, polarisationsoptische Bauelemente oder Spiegel.

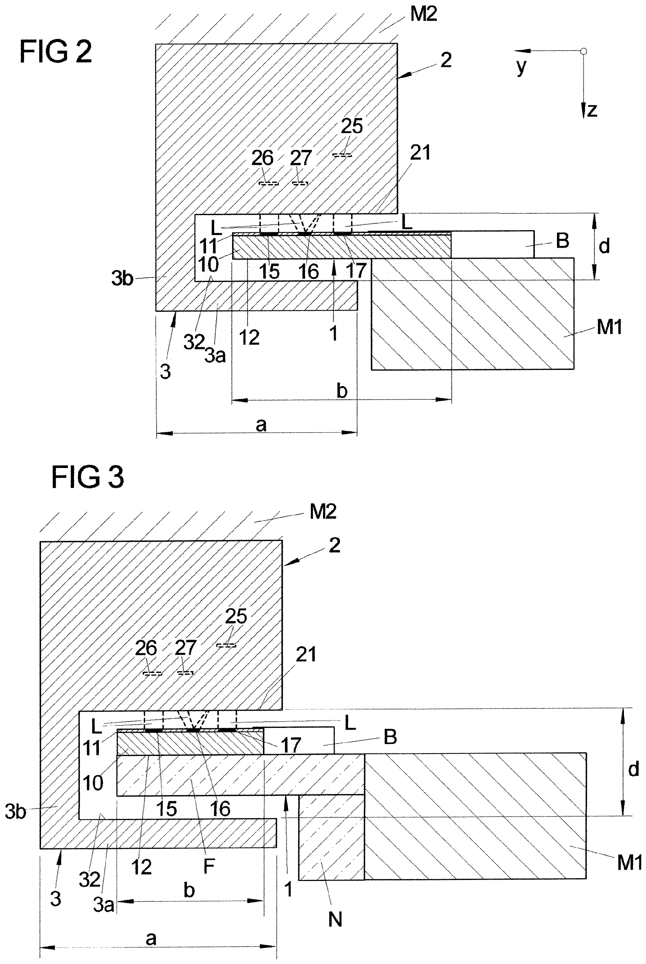

Figur 2 zeigt eine Abwandlung der Anordnung aus Figur 1a, wobei der wesentliche Unterschied darin besteht, dass der Teilungsträger 1 aus Figur 2 eine größere Breite b senkrecht zur Mess- bzw. Erstreckungsrichtung x aufweist als der Teilungsträger aus Figur 1a. Dementsprechend kann der Teilungsträger 1 aus Figur 2 mit einer größeren Teilfläche seiner zweiten Oberfläche 12 an einem zugeordneten Bauteil M1 anliegen, an dem der Teilungsträger 1 über Befestigungsmittel B festgelegt ist.

Figur 3 zeigt in Abwandlung der Anordnung aus Figur 2 einen Teilungsträger 1 mit einer vergleichsweise geringen Breite b - entlang einer Querrichtung y senkrecht zur Mess- bzw. Erstreckungsrichtung x -, so dass der Teilungsträger 1 entlang der Querrichtung y nicht aus dem von der aktiven Seite 21 des Abtastkopfes 2 und dem Umgriff 3 begrenzten Raum hinausragt, z.B. auch wegen einer vergleichsweise großen Ausdehnung a des Schutzabschnittes 3a entlang der Querrichtung b. Daher ist hier an dem dem Teilungsträger 1 zugeordneten Bauteil M1 ein Anbauteil N angebracht, das mit einem Fortsatz F in den Raum zwischen dem Abtastkopf 2 und dem Umgriff 3 ragt. Dort ist der Teilungsträger 1 an jenem Fortsatz F befestigt, und somit über das Anbauteil N am zugeordneten Bauteil M1 festgelegt.

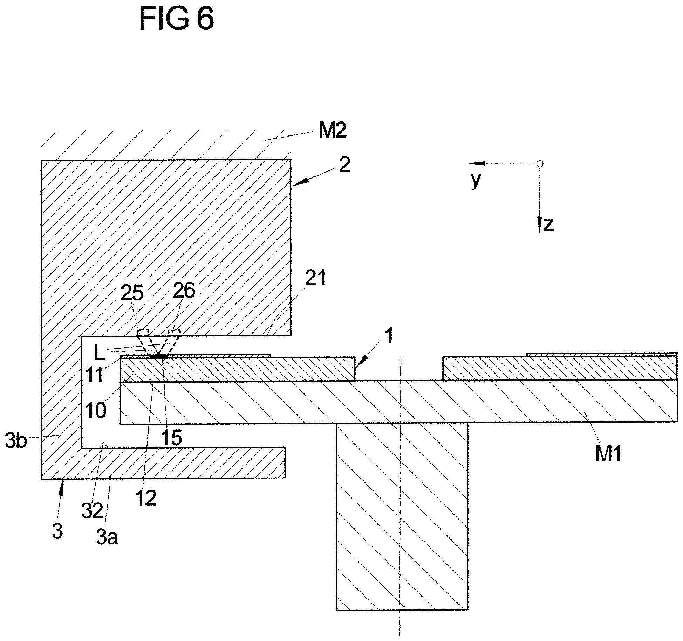

Figur 6 zeigt in Abwandlung der bisherigen Ausführungsbeispiele ein als Winkelmesssystem ausgebildetes Positionsmesssysten, welches einen mit einer rotatorischen Messteilung 15 versehenen Teilungsträger 1 in Form einer Teilscheibe und eine Abtastkopf 2 zum Abtasten der Messteilung 15 des Teilungsträgers 1 aufweist.

Ein derartiges Positionsmesssystem in Form eines Winkelmesssystems (bzw. Drehgebers) dient zur Bestimmung der Position zweier zueinander verdrehbarer Bauteile M1, M2, von denen beispielsweise das eine Bauteil M1 um eine Rotationsachse R drehbar ist und das andere Bauteil M2 ortsfest (stationär) angeordnet ist.

Im Ausführungsbeispiel der Figur 6 ist an dem drehbar gelagerten ersten Bauteil M1 ein bezüglich der Rotationsachse R rotationssymmetrischer Teilungsträger 1 mit einem scheibenförmigen Trägerkörper 10 angeordnet, auf dessen einer (erster) Oberfläche 11 kreisringförmig eine Messteilung 15 umläuft, die im Ausführungsbeispiel der Figur 6 der Einfachheit halber durch eine einzelne Teilungsspur 15 gebildet wird; es können jedoch auch mehrere neben einander liegende Teilungsspuren vorgesehen sein, wie in Figur 5 dargestellt. Die Messteilung 15 umschließt die Rotationsachse R kreisringförmig, so dass jene Rotationsachse R den Mittelpunkt des Kreises schneidet, entlang dem sich die Messteilung 15 erstreckt.

Zur Abtastung der Messteilung 15 sind an einer dem zweiten (stationären) Bauteil M2 zugeordneten Abtasteinrichtung 2 in Form eines Abtastkopfes Sender 25 und Empfänger 26 vorgesehen, die die Messteilung 15 in der bereits weiter oben näher beschriebenen Art und Weise im so genannten Auflicht- bzw. Reflektionsverfahren mittels elektromagnetischer Strahlung L, hier in Form von Laserstrahlung, abtasten.

Befindet sich bei einem derartigen Positionsmesssystem in Form eines Winkelmesssystems die durch den Teilungsträger 1 mit der Messteilung 15 gebildete Teilscheibe (z. B. aufgrund von Montagearbeiten) nicht ordnungsgemäß im Strahlengang der zur Abtastung der Messteilung 15 vorgesehenen Laserstrahlung L, so besteht das Risiko, dass derartige Strahlung unkontrolliert in die Umgebung austreten könnte. Um dies zu verhindern, ist der Abtastkopf 2 mit einem Umgriff 3 versehen, der sich mit einem Schutzabschnitt 3a vor der der Messteilung 15 abgewandten zweiten Oberfläche 12 des Teilungsträgers 1 erstreckt und der über einen Verbindungsabschnitt 3b mit dem Abtastkopf 2 verbunden ist.

Mittels des Umgriffs 3, insbesondere mittels der der zweiten Oberfläche 12 des Teilungsträgers 1 gegenüberliegenden Oberfläche 32 des Schutzabschnittes 3a, kann von dem Sender 25 bei Abwesenheit des Teilungsträgers 1 ausgesandte Laserstrahlung L eingefangen werden, um deren unkontrollierten Austritt in die Umgebung zu verhindern. Für weitere Einzelheiten hierzu wird auf die Erläuterungen zu den Figuren 1a bis 4 verwiesen, die hinsichtlich der Funktion des Umgriffs 3 identisch auch für das Ausführungsbeispiel der Figur 6 gelten, gemäß der das betrachtete Positionsmesssystem als Winkelmesssystem und nicht, wie im Fall der Figuren 1a bis 5, als Längenmesssystem ausgebildet ist.

## Patentansprüche

1. Positionsmesssystem mit
- einem Teilungsträger (1), der an einer ersten Oberfläche (11) eine entlang einer Messrichtung (x) erstreckte, elektromagnetische Strahlung (L) reflektierende Messteilung (15, 16, 17) aufweist und
- einem Abtastkopf (2) zum Abtasten der Messteiiung (15, 16, 17), der einen Sender (25) zum Aussenden elektromagnetischer Strahlung (L) auf die Messteilung (15, 16, 17) und einen Empfänger (26, 27) zum Empfangen von der Messteilung (15, 16, 17) reflektierter Strahlung aufweist, wobei der Sender (25) und der Empfänger (26) auf einer aktiven Seite (21) des Abtastkopfes (2) angeordet sind, die der ersten Oberfläche (11) des Teilungsträgers (1) zugewandt ist und
- wobei der Teilungsträger (1) und der Abtastkopf (2) als voneinander separate Baugruppen ein offenes Positionsmesssystem bilden, so dass der Raum zwischen dem Teilungsträger (1) und dem Abtastkopf (2) nicht gegenüber der Umgebung abgeschlossen ist und sich der Teilungsträger (1) und der Abtastkopf (2) entlang der Messrichtung (x) in beliebige Relativpositionen bewegen lassen und
- wobei von dem Abtastkopf (2) ein gemeinsam mit dem Abtastkopf (2) relativ zu dem Teilungsträger (1) bewegbarer Umgriff (3) absteht, der den Teilungsträger (1), bei bestimmungsgemäßer Anordnung des Abtastkopfes (2) bezüglich des Teilungsträgers (1), derart umgreift, dass sich ein als Schutzabschnitt (3a) bezeichneter Abschnitt des Umgriffs (3) vor einer zweiten Oberfläche (12) des Teilungsträgers (1) erstreckt, die der mit der Messteilung (x) versehenen ersten Oberfläche (11) abgewandt ist und
- wobei der der zweiten Oberfläche (12) des Teilungsträgers (1) gegenüberliegende Schutzabschnitt (3a) des Umgriffes (3) eine solche Ausdehnung (a) aufweist, das von dem Sender (25) bei Abwesenheit des Teilungsträgers (1) ausgesandte elektromagnetische Strahlung (L) auf den Schutzabschnitt (3a) trifft, um den unkontrolllierten Austritt vom Sender (25) des Abtastkopfes (2) ausgesandter elektromagnetischer Strahlung (L) in die Umgebung zu verhindern und
- wobei der Schutzabschnitt (3a) des Umgriffs (3) beabstandet von der zweiten Oberfläche (12) des Teilungsträgers (1) angeordnet ist, wenn sich der Teilungsträger (1) bezogen auf den Abtastkopf (2) in seiner bestimmungsmäßigen Position befindet und
- wobei der Umgriff (3) derart ausgebildet und am Abtastkopf (2) angeordnet ist, dass der Umgriff (3) ein mögliches Verkippen des Teilungsträgers (1) bezüglich des Abtastkopfes (2) begrenzt und
- wobei der Umgriff (3) ein mögliches Verkippen des Teilungsträgers (1) aus seiner bestimmungsgemäßen Position bezüglich des Abtastkopfes (2) auf solche Kippwinkel begrenzt, dass vom Sender (25) ausgesandte und am verkippten Teilungsträger (1) reflektierte elektromagnetische Strahlung nicht aus dem Raum zwischen dem Abtastkopf (2) und dem Umgriff (3) austritt und
- **dadurch gekennzeichnet, dass** der Sender (25) des Abtastkopfes (2) zum Aussenden von Laserstrahlung (L) ausgebildet ist.

2. Positionsmesssystem nach Anspruch 1, wobei der Schutzabschnitt (3a) des Umgriffes (3) derart bezüglich des Abtastkopfes (2) angeordnet ist, dass von dem Sender (25) bei Abwesenheit des Teilungsträgers (1) ausgesandte elektromagnetische Strahlung (L) auf den Abtastkopf (2) zurückgeworfen wird.

3. Positionsmesssystem nach einem der vorhergehenden Ansprüche, wobei der Schutzabschnitt (3a) an mindestens einer Oberfläche (32) so ausgestaltet ist, dass er die vom Sender (25) ausgesandte elektromagnetische Strahlung (L) beim Auftreffen auf die Oberfläche (32) zumindest teilweise absorbiert oder zumindest teilweise streut.

4. Positionsmesssystem nach einem der vorhergehenden Ansprüche, wobei der Schutzabschnitt (3a) auf einer dem Sender (25) des Abtastkopfes (2) zugewandten Seite eine schwarze Oberfläche (32) aufweist.

5. Positionsmesssystem nach einem der vorhergehenden Ansprüche, wobei der Schutzabschnitt (3a) auf seiner dem Sender (25) des Abtastkopfes (2) zugewandten Seite eine zur Streuung elektromagnetischer Strahlung aufgeraute Oberfläche (32) aufweist.

6. Positionsmesssystem nach einem der vorhergehenden Ansprüche, wobei der Schutzabschnitt (3a) des Umgriffes (3) frei von optischen Elementen ist, die zum Aussenden, Führen oder Empfangen elektromagnetischer Strahlung während einer Positionsmessung dienen.

7. Positionsmesssystem nach einem der vorhergehenden Ansprüche, wobei der Umgriff (3) starr mit dem Abtastkopf (2) verbunden ist.

8. Positionsmesssystem nach einem der vorhergehenden Ansprüche, wobei der Umgriff (3) einen Verbindungsabschnitt (3b) aufweist, über den der Schutzabschnitt (3a) des Umgriffs (3) mit dem Abtastkopf (2) verbunden ist.

9. Positionsmesssystem nach einem der vorhergehenden Ansprüche, wobei der Umgriff (3) lösbar mit dem Abtastkopf (2) verbunden ist und dass die Verbindung zwischen Umgriff (3) und Abtastkopf (2) nur mit einem speziell hierfür ausgelegten Werkzeug lösbar ist.

10. Positionsmesssystem nach einem der vorhergehenden Ansprüche, wobei das Positionsmesssystem als ein Längenmesssystem mit einem Teilungsträger (1) in Form eines längserstreckten Maßstabes ausgebildet ist, auf dem sich die Messteilung (15, 16, 17) in Längsrichtung erstreckt.

11. Positionsmesssystem nach einem der Ansprüche 1 bis 9, wobei das Positionsmesssystem als ein Winkelmesssystem mit einem scheibenförmigen Trägerkörper (1) ausgebildet ist, auf dem sich die Messteilung (15) entlang einer Kreisbahn erstreckt.

## Claims

1. Position measuring system having
- a graduation carrier (1) that has a measurement graduation (15, 16, 17) that reflects electromagnetic radiation (L) and extends along a measurement direction (x) on a first surface (11) and
- a scanning head (2) for scanning the measurement graduation (15, 16, 17), said scanning head having a transmitter (25) for emitting electromagnetic radiation (L) onto the measurement graduation (15, 16, 17) and a receiver (26, 27) for receiving radiation reflected by the measurement graduation (15, 16, 17), wherein the transmitter (25) and the receiver (26) are arranged on an active side (21) of the scanning head (2) that faces the first surface (11) of the graduation carrier (1) and
- wherein the graduation carrier (1) and the scanning head (2), as mutually separate components, form an open position measuring system such that the space between the graduation carrier (1) and the scanning head (2) is not sealed in relation to the surroundings and the graduation carrier (1) and the scanning head (2) can be moved into any relative position along the measurement direction (x), and
- wherein a wraparound (3) that can be moved together with the scanning head (2) relative to the graduation carrier (1) protrudes from the scanning head (2), said wraparound wrapping around the graduation carrier (1) in respect of the graduation carrier (1) in the case of an intended arrangement of the scanning head (2) in such a way that a portion of the wraparound (3), referred to as protective portion (3a), extends in front of a second surface (12) of the graduation carrier (1) that faces away from the first surface (11) provided with the measurement graduation (x) and
- wherein the protective portion (3a) of the wraparound (3) lying opposite the second surface (12) of the graduation carrier (1) has such an extent (a) that electromagnetic radiation (L) emitted by the transmitter (25) when the graduation carrier (1) is absent strikes the protective portion (3a) in order to prevent the uncontrolled emission of electromagnetic radiation (L) emitted by the transmitter (25) of the scanning head (2) into the surroundings and
- wherein the protective portion (3a) of the wraparound (3) is arranged at a distance from the second surface (12) of the graduation carrier (1) when the graduation carrier (1) is in its intended position in relation to the scanning head (2) and
- wherein the wraparound (3) is embodied and arranged on the scanning head (2) in such a way that the wraparound (3) restricts a possible tilt of the graduation carrier (1) in respect of the scanning head (2) and
- wherein the wraparound (3) restricts a possible tilt of the graduation carrier (1) from its intended position in respect of the scanning head (2) to tilt angles ensuring that electromagnetic radiation emitted by the transmitter (25) and reflected at the tilted graduation carrier (1) does not emerge from the space between the scanning head (2) and the wraparound (3) and
- **characterized in that**
the transmitter (25) of the scanning head (2) is embodied for emitting laser radiation (L).

2. Position measuring system according to Claim 1, wherein the protective portion (3a) of the wraparound (3) is arranged in relation to the scanning head (2) in such a way that electromagnetic radiation (L) emitted by the transmitter (25) when the graduation carrier (1) is absent is cast back onto the scanning head (2).

3. Position measuring system according to any one of the preceding claims, wherein the protective portion (3a) is configured on at least one surface (32) in such a way that it at least partly absorbs or at least partly scatters the electromagnetic radiation (L) emitted by the transmitter (25) upon striking the surface (32).

4. Position measuring system according to any one of the preceding claims, wherein the protective portion (3a) has a black surface (32) on a side facing the transmitter (25) of the scanning head (2).

5. Position measuring system according to any one of the preceding claims, wherein the protective section (3a) has a surface (32) that is roughened for scattering electromagnetic radiation on the side thereof facing the transmitter (25) of the scanning head (2).

6. Position measuring system according to any one of the preceding claims, wherein the protective portion (3a) of the wraparound (3) is free from optical elements that serve to emit, guide or receive electromagnetic radiation during a position measurement.

7. Position measuring system according to any one of the preceding claims, wherein the wraparound (3) is rigidly connected to the scanning head (2).

8. Position measuring system according to any one of the preceding claims, wherein the wraparound (3) has a connecting portion (3b), by means of which the protective portion (3a) of the wraparound (3) is connected to the scanning head (2).

9. Position measuring system according to any one of the preceding claims, wherein the wraparound (3) is non-detachably connected to the scanning head (2) and in that the connection between wraparound (3) and scanning head (2) is only detachable by means of a tool specifically designed to this end.

10. Position measuring system according to any one of the preceding claims, wherein the position measuring system is embodied as a length measuring system having a graduation carrier (1) in the form of a longitudinally extended material measure, on which the measurement graduation (15, 16, 17) extends in the longitudinal direction.

11. Position measuring system according to any one of Claims 1 to 9, wherein the position measuring system is embodied as an angle measuring system with a disc-shaped carrier body (1), on which the measurement graduation (15) extends along a circular path.

## Revendications

1. Dispositif de mesure de position, avec
- un support de graduation (1) qui, sur une première surface (11), présente une graduation de mesure (15, 16, 17) s'étendant le long d'une direction de mesure (x) et réfléchissant un rayonnement électromagnétique (L), et
- une tête de lecture (2) destinée à lire la graduation de mesure (15, 16, 17), et qui présente un émetteur (25) destiné à émettre un rayonnement électromagnétique (L) vers la graduation de mesure (15, 16, 17) et un récepteur (26, 27) destiné à la réception d'un rayonnement réfléchi par la graduation de mesure (15, 16, 17), l'émetteur (25) et le récepteur (26) étant disposés sur un côté actif (21) de la tête de lecture (2) qui est tourné vers la première surface (11) du support de graduation (1), et
- le support de graduation (1) et la tête de lecture (2) formant, en tant que composants séparés l'un de l'autre, un dispositif de mesure de position ouvert de telle sorte que l'espace entre le support de graduation (1) et la tête de lecture (2) n'est pas fermé par rapport à l'environnement et le support de graduation (1) et la tête de lecture (2) peuvent être déplacés le long de la direction de mesure (x) dans n'importe quelles positions relatives, et
- un élément de recouvrement (3), mobile conjointement avec la tête de lecture (2) relativement au support de graduation (1), étant distant de la tête de lecture (2) et recouvrant le support de graduation (1) quand la tête de lecture (2) est positionnée de façon appropriée par rapport au support de graduation (1), de telle sorte qu'un tronçon de l'élément de recouvrement (3), désigné en tant que tronçon de protection (3a), s'étend devant une deuxième surface (12) du support de graduation (1) qui est éloignée de la première surface (11) munie de la graduation de mesure (x), et
- le tronçon de protection (3a) de l'élément de recouvrement (3) opposé à la deuxième surface (12) du support de graduation (1) présentant une extension (a) telle qu'un rayonnement électromagnétique (L) émis par l'émetteur (25) en l'absence du support de graduation (1) heurte le tronçon de protection (3a) pour empêcher la sortie incontrôlée dans l'environnement d'un rayonnement électromagnétique (L) émis par l'émetteur (25) de la tête de lecture (2), et
- le tronçon de protection (3a) de l'élément de recouvrement (3) étant disposé à distance de la deuxième surface (12) du support de graduation (1) quand le support de graduation (1) est positionné de façon appropriée par rapport à la tête de lecture (2), et
- l'élément de recouvrement (3) étant constitué et étant disposé sur la tête de lecture (2) de telle sorte que l'élément de recouvrement (3) limite un basculement possible du support de graduation (1) par rapport à la tête de lecture (2), et
- l'élément de recouvrement (3) limitant un basculement possible du support de graduation (1) à partir de sa position appropriée par rapport à la tête de lecture (2) à un angle de basculement tel qu'un rayonnement électromagnétique émis par l'émetteur (25) et réfléchi sur le support de graduation (1) basculé ne sort pas de l'espace entre la tête de lecture (2) et l'élément de recouvrement (3), et
- **caractérisé en ce que**
l'émetteur (25) de la tête de lecture (2) est constitué pour l'émission d'un rayonnement laser (L).

2. Dispositif de mesure de position selon la revendication 1, le tronçon de protection (3a) de l'élément de recouvrement (3) étant disposé par rapport à la tête de lecture (2) de telle sorte qu'un rayonnement électromagnétique (L) émis par l'émetteur (25) en l'absence du support de graduation (1) est rejeté vers la tête de lecture (2).

3. Dispositif de mesure de position selon l'une des revendications précédentes, le tronçon de protection (3a) étant constitué sur au moins une surface (32) de telle sorte que, lors de l'impact sur la surface (32), il absorbe au moins partiellement ou disperse au moins partiellement le rayonnement électromagnétique (L) émis par l'émetteur (25).

4. Dispositif de mesure de position selon l'une des revendications précédentes, le tronçon de protection (3a) présentant une surface (32) noire sur un côté tourné vers l'émetteur (25) de la tête de lecture (2).

5. Dispositif de mesure de position selon l'une des revendications précédentes, le tronçon de protection (3a) présentant sur son côté tourné vers l'émetteur (25) de la tête de lecture (2) une surface (32) rugueuse destinée à la dispersion d'un rayonnement électromagnétique.

6. Dispositif de mesure de position selon l'une des revendications précédentes, le tronçon de protection (3a) de l'élément de recouvrement (3) étant dépourvu d'éléments optiques qui servent à l'émission, au guidage ou à la réception d'un rayonnement électromagnétique pendant une mesure de position.

7. Dispositif de mesure de position selon l'une des revendications précédentes, l'élément de recouvrement (3) étant raccordé de façon rigide à la tête de lecture (2) .

8. Dispositif de mesure de position selon l'une des revendications précédentes, l'élément de recouvrement (3) présentant un tronçon de raccordement (3b) par le biais duquel le tronçon de protection (3a) de l'élément de recouvrement (3) est raccordé à la tête de lecture (2) .

9. Dispositif de mesure de position selon l'une des revendications précédentes, l'élément de recouvrement (3) étant raccordé de façon détachable à la tête de lecture (2), et le raccordement entre l'élément de recouvrement (3) et la tête de lecture (2) ne pouvant être détaché qu'avec un outil spécialement conçu à cet effet.

10. Dispositif de mesure de position selon l'une des revendications précédentes, le dispositif de mesure de position étant conçu en tant que système de mesure de longueur avec un support de graduation (1) sous la forme d'une règle graduée étendue en longueur sur laquelle la graduation de mesure (15, 16, 17) s'étend dans la direction longitudinale.

11. Dispositif de mesure de position selon l'une des revendications 1 à 9, le dispositif de mesure de position étant constitué en tant que système de mesure d'angle avec un support de graduation (1) en forme de disque sur lequel la graduation de mesure (15) s'étend le long d'une trajectoire circulaire.
